Europäisches Patentamt

European Patent Office

Office européen des brevets

(19)

(11) Publication number: **0 001 877**
**B1**

## EUROPEAN PATENT SPECIFICATION

(12)

(45) Date of publication of patent specification: **25.11.81**

(21) Application number: **78300288.4**

(22) Date of filing: **04.08.78**

(51) Int. Cl.³: **C 09 J  3/14,  C 09 J  3/26, C 08 J  5/12**

(54) Adhesive composition.

(30) Priority: **03.11.77 US 848285**

(43) Date of publication of application:
**16.05.79 Bulletin 79/10**

(45) Publication of the grant of the European patent:
**25.11.81 Bulletin 81/47**

(84) Designated Contracting States:
**BE DE FR GB SE**

(56) References cited:
US - A - 3 929 938

CHEMICAL ABSTRACTS, vol. 84,
no. 14, April 5, 1976 Columbus Ohio USA
page 43, abstract nr. 91125t

RESEARCH DISCLOSURE, no. 144
(April 1976), abstract no. 14401,
pages 16-17

(73) Proprietor: **Gulf Oil Corporation**
**P. O. Box 1166**
**Pittsburgh Pennsylvania 15230 (US)**

(72) Inventor: **Lakshmanan, Pallavoor R.**
**15311 Ripplestream**
**Houston Texas 77068 (US)**

(74) Representative: **Fitzpatrick, Alan James**
**FITZPATRICKS 48 St. Vincent Street**
**Glasgow G2 5TT (GB)**

Courier Press, Leamington Spa, England.

# 0 001 877

## Adhesive composition

The present invention is useful in bonding low-energy plastic surfaces to each other, for example, in construction, automotive applications, plastic fabricating, packaging, structural foam bonding, assembly of toys, etc.

Ordinarily, adhesive bonding of low-energy plastic surfaces to each other requires some form of surface treatment prior to application of an adhesive to obtain high bond strengths between the surfaces so contacted. Low-energy plastic surfaces bonded to each other without prior surface treatment, such as by relatively weak, tacky adhesive, are inadequate for many purposes such as those requiring strengths in a range in excess of several hundreds or thousands of pounds per square inch gauge of bonded area.

For strong bonds involving low-energy plastic surfaces, some form of surface treatment or etching is required prior to application of an adhesive. Surface pretreatment of low-energy plastic surfaces, for example, involves either acid etching with sulfuric, nitric, chromic acids or mixtures thereof, or flame treatment, corona discharge treatment, treatment with plasma jets or low and high energy radiation.

Adhesive compositions which may be used for bonding low-energy plastic surfaces, but requiring surface treatment, include polysulfide-rubber modified epoxies, epoxy-polyamides, nitrile-phenolics and polyesters. These compositions, additionally, may require long hours of post-cure and/or clamping at temperatures substantially higher than room temperature. Often at least two of the components of these adhesive compositions must be premixed prior to application.

Consequently, a need exists for an adhesive composition and much simpler process for bonding low-energy plastic surfaces to each other. In accordance with the present invention a novel hot melt adhesive composition is provided which requires minimal heating of the surfaces to be bonded together and maximum bond strength in a matter of minutes or a few hours without resort to elaborate postcuring procedures. Further, the adhesive composition of the present invention can be applied in its melt form to low-energy plastic surfaces in such a manner to provide rapid assembly of components and immediate handling of the assembled parts. Another advantage of the present invention is that the bonds can deliver strengths in excess of 520 pounds per square inch gauge (36.5 kg/cm$^2$) under tension, preferably in excess of 550 pounds per square inch gauge (38.7 kg/cm$^2$).

Unlike the present invention, U.S. Patent No. 3,560,420 to Tamura et al is directed to an adhesive containing ethylene-vinyl acetate copolymer, rosin and polyethylene having a molecular weight in excess of about 5000 for bonding a resin film to wood.

U.S. Patent No. 3,615,106 to Flanagan et al discloses an adhesive containing ethylene-vinyl acetate copolymer, a tackifier, polyethylene having a molecular weight in excess of 10,000 and a diluent such as a low molecular weight polyethylene for binding books.

U.S. Patent No. 3,689,334 to Dermody teaches an adhesive containing ethylene-vinyl acetate copolymer, a tackifier, and any wax for bonding organic polymers to wood. Although Dermody includes polyethylene wax among his many waxes, synthetic as well as natural, there is no example therein of a polyethylene wax. To Dermody all waxes are considered equally good; whereas, in the present invention only certain selected polyethylene waxes are effective.

It has been previously disclosed to prepare hot melt adhesive compositions, for application to plastic surfaces without surface pretreatment, containing ethylene-vinyl acetate polymer, polypropylene wax and hydrogenated rosin ester. (Chem. Abst. 84: 91125t — Nakamura). Also, low molecular weight polyethylene has been suggested as a possible component of a hot melt adhesive for polyolefin plastics (U.S. Patent No. 3,626,026 — Masuo). Another previously suggested hot melt composition includes a mixture of ethylene-vinyl acetate resin, paraffin wax and certain tackifiers such as hydrogenated rosin and terpene resins. (Chem. Abst. 73: 16469c — Yamagishi).

U.S. Patent No. 3,929,938 to White discloses hot melt adhesives which contain (a) a copolymer of ethylene and a vinyl ester or acrylic or methacrylic esters of saturated alcohols and (b) a condensation product of limonene and phenol.

We have discovered a unique adhesive composition for bonding low-energy plastic surfaces to each other which provides a tensile lap shear strength in excess of 520 pounds per square inch gauge (36.5 Kg/cm$^2$) which comprises: (1) an ethylene-vinyl ester copolymer having from 4 to 35 weight percent of a vinyl ester; (2) a tackifier selected from (a) a rosin, (b) a rosin ester, (c) a terpene resin, (d) a terpene-phenolic resin and (e) a rosin modified phenolic resin, and (3) a polyethylene wax composed of at least 70% of linear molecules and having a molecular weight of from 600 to 3000, a penetration as measured by ASTM D—1321 of from 0.25 to 1.5 at 25°C, and a density at 25°C of from 0.93 to 0.97 g/cc. ASTM means American Society for Testing Materials.

A procedure for bonding plastic surfaces using a hot melt adhesive is disclosed and claimed in our copending application, Serial No. 0001875, filed concurrently herewith, entitled "Process for bonding low-energy plastic surfaces".

Our copending application No. 0001878 also describes and claims the bonding of low-energy plastic surfaces by means of a hot melt adhesive.

The adhesive composition of the present invention contains a specific ethylene-vinyl ester

2

copolymer, a tackifier, and a specific polyethylene wax.

(1) *Ethylene-Vinyl Ester Copolymer.* Ethylene-vinyl ester copolymers that can be used herein include vinyl esters having from 2 to 4 carbon atoms. Examples of suitable ethylene-vinyl ester copolymers are ethylene-vinyl acetate, ethylene-vinyl formate, ethylene-vinyl propionate, ethylene-vinyl butyrate and mixtures thereof. The copolymer will contain from 4 to 35 weight percent, preferably 6 to 28 weight percent, of a vinyl ester, and may conveniently have a melt index as measured by ASTM 1238—52T of from 0.5 to 200, preferably from 2.0 to 100. These copolymers can be prepared by any method generally employed in the art, for example, preparation such as that taught in U.S. Patent Nos. 2,200,429 to Perrin et al and 2,703,794 to Roedel. In the present invention blends, or mixtures, of ethylene-vinyl ester copolymers are sometimes used to obtain a melt index within the desired range. For example, if blends or mixtures of ethylene-vinyl ester copolymers are employed, the individual ethylene-vinyl ester copolymers making up the blends or mixtures need not have the melt index defined above, provided the resulting mixture has a melt index within the defined range.

(2) *Tackifiers.* As contemplated in the present invention suitable tackifiers can be selected from (a) a rosin, (b) a rosin ester, (c) a terpene resin, (d) a terpene-phenolic resin and (e) a rosin-modified phenolic resin. Tackifiers which are present in the adhesive composition serve to extend the adhesive properties of the ethylene-vinyl ester copolymer. Tackifiers for use in the present invention may have a softening point in the range of 40 to 150°C, preferably 65 to 135°C. Small amounts of tackifiers having a softening point of less than 40°C, or higher than 150°C can be mixed or blended with tackifiers in the desired range to give desirable results; however, tackifier blends having a tackifier with a softening point of less than 40°C or higher than 150°C are not preferred in the invention as set forth. Examples of rosins and rosin esters in the hot melt system include both natural and modified rosins, such as, for example, gum rosin, wood rosin, tall oil rosin, distilled rosin, hydrogenated rosin, dimerized rosin, disproportioned rosin, and polymerized rosin; glycerine and pentaerythritol esters of rosin, including stabilized, hydrogenated, polymerized, disproportionated, dimerized and unmodified rosin. Terpene resins, sometimes called polyterpene resins, result from polymerization of terpene hydrocarbons, such as bicyclic monoterpene known as pinene, in the presence of a Friedel-Crafts catalyst at moderately low temperatures. Terpene resins effective for the adhesive composition may have a softening point as measured by ASTM E28—58T of from about 40 to about 135°C. Another example of a suitable terpene resin is a polymerized beta-pinene. Terpene phenolic-resins can include, for example, the product resulting from the condensation of bicyclic terpene, in an acidic medium and/or terpene alcohol with phenol. Rosin-modified phenolic resins can include, for example, the reaction products of rosin with phenol-formaldehyde condensate. Rosin and rosin esters can be prepared, for example, according to the methods described in *Encyclopedia of Polymer Science and Technology*, Interscience Publishers, a Division of John Wiley & Sons (New York: 1964), Volume 12, pp. 139—164: terpene resins can be prepared, for example, according to the methods described in Volume 13, pp. 575—596 of the same publication. Terpene-phenolic resins and rosin-modified phenolic resins can be prepared, for example, according to the methods described in *Organic Coating Technology*, H.F. Payne, John Wiley & Sons (New York: 1954), Volume 1, pp. 183—184 and 168—170, respectively.

*Polyethylene Wax.* A polyethylene wax is employed to reduce the melt viscosity of the hot melt adhesive composition without appreciably decreasing the adhesive bonding. Suitable polyethylene waxes in the present invention have an average molecular weight of from 600 to 3000, preferably 600 to 2500, and most preferably 900 to 2000. Polyethylene waxes used in the present invention are essentially linear, that is, at least 70 percent of the molecules are linear or paraffinic; preferably at least 90 percent are linear. The n-paraffin or n-alkane content of hydrocarbon waxes can be determined by molecular sieve adsorption of by urea adduction. The penetration or hardness of the wax at 25°C is from 0.25 to 1.5, preferably 0.75 to 1.00 as determined by ASTM—D 1321. The density at 25°C of the polyethylene wax employed in the present invention is from 0.93 to 0.97 g/cc, preferably 0.94 to 0.96 g/cc. Each of the enumerated parameters are interrelated as is readily apparent to one of ordinary skill in the art. Polyethylene waxes can be obtained, for example, by the low-pressure polymerization of ethylene using Ziegler Catalysts.

If desired, other components generally added to an adhesive composition for a particular purpose can also be present in an amount of from 0.1 to 5, preferably 0.2 to 2, weight percent based on the weigh of the final composition. An example of such an additive is an antioxidant such as butylated hydroxy toluene.

For purposes of the present invention a low-energy plastic surface is defined as one which has a surface tension ($\tau c$) of from 24 to 37 dynes/cm (mN/m). For example, polyethylene ranges from 25.5 to 36 dynes/cm, and polypropylene ranges from 24 to 34 dynes/cm.

In general, the particularly preferred adhesive compositions of the invention, have the following components in the following amounts as set forth in Table 1.

TABLE 1: Adhesive Composition

|  | Broad Range, wt % | Preferred Range, wt % |
|---|---|---|
| Ethyl-Vinyl Ester Copolymer | 15 to 55 | 25 to 55 |
| Tackifier | 25 to 45 | 25 to 40 |
| Polyethylene Wax | 5 to 55 | 5 to 50 |

The adhesive composition can be prepared in any conventional manner. Thus, for example, a preferred procedure involves the use of a so-called melt mixing technique in which the wax (diluent) together with an antioxidant, if used, is maintained in a stirred molten state at a temperature from 130 to 230°C, preferably from 140 to 170°C, during which time the tackifier is added followed by the addition of the ethylene-vinyl ester copolymer. Mixing is continued until a homogeneous mixture is obtained, approximately after about 15 minutes to about 4 hours.

The adhesive composition of the present invention is used to bond low-energy surfaces having a surface tension of from 24 to 37 dynes per centimeter to each other. The process involves heating said surfaces which are to be bonded to each other to a temperature of at least 50°C, preferably 60°C to 130°C, followed by an application of the adhesive composition of the present invention, while the adhesive is in a temperature range of 140 to 240°C, preferably 160 to 220°C, to at least one of the surfaces. Then the surfaces are brought in contact with each other. After assembly the bond reaches maximum tensile strength in a matter of minutes or few hours. No post-curing is required, and therefor, rapid assembly and handling of assembled parts is possible.

Description of Preferred Embodiments
The invention will be further described with reference to the experimental data.

The adhesive composition in the present invention were prepared as follows. A polyethylene wax, in an amount sufficient to make a 201-gram batch of adhesive, was mixed with an antioxidant, butylated hydroxy toluene. The wax-antioxidant mixture was placed in a jacketed 400-ml capacity Brabender Plasticorder and kept hot by an oil both heated to approximately 145 to 155°C. At a slow, 50-rpm blade setting, the wax-antioxidant mixture was melted and then the tackifier was added while mixing continued. Continued mixing produced a fluid wax-antioxidant-tackifier mixture. An ethylene-vinyl ester copolymer was added to the fluid wax-antioxidant-tackifier mixture in the order of high melt index copolymer followed by low melt index copolymer. Mixing was continued at a top speed setting of the blades at approximately 150 rpm for approximately 10 to about 15 minutes until homogeneity occurred, and then the speed was decreased to 100 rpm and the composition was mixed for approximately 5 minutes. On completion of mixing, the torque generally levelled-off, and the adhesive composition was ready to be poured. Total mixing time was about 15 to about 20 minutes.

Low energy plastic test specimens were prepared in accordance with the following procedure. Test strips having a dimension of 1 x 3 x 1/8 in. (2.54 x 7.5 x 0.31 cm) or 1 x 3 x 3/16 in. (2.54 x 7.5 x 0.47 cm) were used in the preparation of tensile lap shear strength test specimens. The strips were cleaned with acetone rinse and wiped dry. The test strips (two for each test specimen) were then exposed to an infrared lamp to heat the surface areas to be bonded to between about 90 to about 95°C. Molten adhesive at temperatures between about 176 to about 190°C was applied as a 1/8 in. (0.31 cm) bead over a square inch (6.54 cm²) area on one of the test strips. A lap shear strength specimen was prepared immediately following application of the adhesive composition by quickly placing another strip over the adhesive with the heated side of the strip on the adhesive to provide a square inch (6.54 cm²) lap. Manual pressure was used to spread the adhesive over the bonded area. A 500-gram weight was then placed on the bonded area and left for about 5 minutes, to maintain contacts of the surfaces during initial cooling, after which it was removed. The specimen was cooled to 23°C and excessive adhesive was removed. The specimen was stored overnight prior to testing. At least two specimens were prepared for each evaluation and the values reported as an average of the two for a given test run.

The method used for testing the adhesive bond strength was the tensile lap shear method with modifications as described in U.S. Patent No. 3,393,174 at columns 2 through 3. The values for lap shear were measured by determining on an Instron (Trade Mark) the force required to break the bond. As a modification employed herein, the rate of extension was 2 inches (5 cm) per minute. The force divided by the area of the bond gives the lap shear in pounds per square inch.

Table 2 contains a listing of various types of waxes and their characteristics employed in the preparation of the test run.

4

TABLE 2: Properties of Waxes

| Wax No. Used | Description | Penetration[1] | Density[2] | Molecular Weight |
|---|---|---|---|---|
| I | Microcrystalline Wax | 16 | 0.942 | <900 |
| II | Microcrystalline Wax | 7 | 0.934 | <900 |
| III | Microcrystalline Wax | 7 | 0.95 | <900 |
| IV | Microcrystalline Wax | 17 | 0.94 | <900 |
| V | Polyethylene Wax | 1 | 0.94 | 900 |
| VI | Polyethylene Wax | 2 − 4 | 0.92 | 1700 |
| VII | Refined Microcrystalline Wax | 15 − 20 | 0.94 | <900 |
| VIII | Polyethylene Wax | 3 | 0.908 | 7000 |
| IX | Polyethylene Wax | 3 − 4 | 0.96 | <2000 |
| X | Polyethylene Wax | 1 | 0.96 | 1600 |

[1] Hardness as determined by ASTM D−1321 at 25°C.

[2] g/cc, at 25°C

A series of runs was carried out using the specific adhesive composition as set forth in Table 3. The results of these runs are given in Table 4 as Run Nos. 1 through 10. In Table 4 it can be seen that Run Nos. 5 and 10 have desired tensile lap shear strength.

TABLE 3: Adhesive Composition[1]

| Component | Parts by Weight |
|---|---|
| Ethylene-Vinyl Acetate Copolymer A[2] | 10 |
| Ethylene-Vinyl Acetate Copolymer B[3] | 30 |
| Glycerine Ester of Wood Rosin[4] | 40 |
| Wax[5] | 20 |

[1] Optional antioxidant, for example, 0.5 parts by weight butylated hydroxy toluene was used in all experiments herein.

[2] 18 wt % vinyl acetate; melt index 500 $\left(\text{combined melt index} = 8.8\right)$

[3] 18 wt % vinyl acetate; melt index 2.5

[4] Softening point 83°C, Staybelite Ester 10 from Hercules Inc. (Staybelite is a Trade Mark)

[5] Variable as identified in Table 2.

0 001 877

TABLE 4: Influence of Wax on Adhesive Performance as
Measured by Tensile Lap Shear

| | | Properties | |
| Run No. | Wax No. Used | Viscosity, [1]cps at 350°F (176.6°C) | Tensile Lap Shear,[2] psi (kg/cm$^2$) |
| --- | --- | --- | --- |
| 1 | I | 13,600 | 468 (32.9) |
| 2 | II | 13,500 | 457 (32.1) |
| 3 | III | 13,625 | 487 (34.23) |
| 4 | IV | 15,000 | 427 (30.02) |
| 5 | V | 15,925 | 705 (49.56)[3] |
| 6 | VI | 20,200 | 465 (32.69) |
| 7 | VII | 14,610 | 512 (36.02) |
| 8 | VIII | >25,000 | 404 (28.40) |
| 9 | IX | 13,200 | 505 (35.5) |
| 10 | X | 20,125 | 910 (56.94)[3] |

[1] Brookfield Thermosel.

[2] One square inch overlap (6.45 cm$^2$)

[3] One-half inch overlap (1.61 cm$^2$). Note: the plastic failed before the bond broke so instead of one square inch overlap one-half square inch overlap was used and tensile lap shear strength for breaking bond measured.

A further study was made to determine the influence of the amount of polyethylene wax used in the adhesive composition on tensile lap shear strength. An additional run, Run No. 11 was prepared in accordance with the composition reported in Table 5 and was compared to the composition of Run No. 5 repeated in Table 5 for convenience. Both Run Nos. 5 and 11 fall within the parameters of the present invention. Run 5 had a wax level of 20% while Run 11 had a wax level of 40%.

6

TABLE 5: Influence of Amount of Wax on Adhesive Performance

| Run Numbers | 5 | 11 |
|---|---|---|
| Composition, parts by weight[1] | | |
| Ethylene-Vinyl Acetate Copolymer A, 18% vinyl acetate, melt index 500. | 10 | 7.5 |
| Ethylene-Vinyl Acetate Copolymer B, 18% vinyl acetate, melt index 2.5 | 30 | 22.5 |
| Glycerine Ester of Hydrogenated Rosin, Softening point 83°C | 40 | 30 |
| Wax No. V in Table 2. | 20 | 40 |
| Inspections | | |
| Viscosity, cps at 350°F (176.6°C) | 15,925 | 3,120 |
| Tensile Lap Shear, psi (kg/cm²) | | |
| One-square inch overlap (6.45 cm²) | >550 (38.66)[2] | >553 (38.87)[2] |
| one-half square inch overlap (1.61 cm²) | 705 (49.56) | 765 (53.87) |

[1] See Table 3, footnote #1.

[2] Plastic failed before bond. See Table 4. footnote #3.

A study was made to determine the effect of different tackifiers in the adhesive composition on tensile lap shear strength. The results are reported as Run Nos. 12, 13, 14 and 15 in Table 6. In the present invention Run Nos. 12 through 15 fall within the parameters of the present invention.

## 0 001 877

TABLE 6: Effect of Different Tackifiers on Adhesive Performance

| Run Numbers | 12 | 13 | 14 | 15 |
|---|---|---|---|---|
| Composition, parts by weight[1] | | | | |
| Ethylene-Vinyl Acetate Copolymer A, 18% vinyl acetate, melt index 500 | 10 | 10 | — | 10 |
| Ethylene-Vinyl Acetate Copolymer B, 18% vinyl acetate, melt index 2.5 | 30 | 30 | 40 | 30 |
| Glycerine Ester of Tall Oil Rosin[2] | 40 | — | — | — |
| Terpene Resin[3] | — | 40 | — | — |
| Terpene-Phenolic Resin[4] | — | — | 40 | — |
| Glycerine Ester of Highly Hydrogenated Rosin[5] | — | — | — | 40 |
| Wax No. V in Table 2. | 20 | 20 | 20[7] | 20[7] |
| Inspections | | | | |
| Viscosity, cps at 350°F (176.6°C) | 16,025 | 19,000 | 49,500 | 20,000 |
| Tensile Lap Shear, psi (kg/cm²) | | | | |
| one square inch overlap (6.45 cm²)[6] | >530 (37.2) | >543 (37.2) | >555 (39.02) | |
| one-half square inch overlap (1.61 cm²) | 1005 (70.6) | 665 (46.75) | — | 1080 (75.9) |

[1] See Table 3, footnote #1.

[2] Zonester 85 (R & B Softening Point 83°C) from Arizona Chemical Company.

[3] Nirez 1135 (R & B Softening Point 135°C) from Reichhold Chemicals. (Nirez is a Trade Mark)

[4] Nirez 2019 (R & B Softening Point 122°C) from Reichhold Chemicals.

[5] Foral 85 (R & B Softening Point 82°C) from Hercules Inc. (Foral is a Trade Mark)

[6] Plastic failed before bond. See Table 4, footnote #3.

[7] Wax No. X in Table 2.

The effect of the amount of tackifier in the adhesive composition on the tensile lap shear strength was evaluated in Table 7 as Run Nos. 16 and 17. Both Run Nos. 16 and 17 are acceptable compositions and result in the desired tensile lap shear strength.

8

## TABLE 7: Effect of Amount of Tackifier on Adhesive Performance

| Run Numbers | 16 | 17 |
|---|---|---|
| Composition, parts by weight[1] | | |
| Ethylene Vinyl Acetate Copolymer A, 18% vinyl acetate, melt index 500 | 10 | 13.3 |
| Ethylene Vinyl Acetate Copolymer B, 18% vinyl acetate, melt index 2.5 | 30 | 40 |
| Glycerine Ester of Tall Oil Rosin[2] | 40 | 26.7 |
| Wax No. X in Table 2 | 20 | 20 |
| Inspections | | |
| Viscosity, cps at 350°F (176.6°C) | 24,600 | >25,000 |
| Tensile Lap Shear psi (kg/cm²) | | |
| One-half square inch overlap (1.61 cm²)[3] | 900 (63.27) | 805 (56.59) |

[1] See Table 3, footnote #1.

[2] See Table 6, footnote #2.

[3] See Table 4, footnote #3.

Table 8 contains Run Nos. 18 through 23. Run Nos. 18 through 23 demonstrate the effectiveness of different adhesive compositions. Run No. 18 used 10% vinyl acetate with a melt index of 70, while Run No. 19 contained 18% vinyl acetate with a melt index of 2.5. Run Nos. 20 and 21 demonstrate the effect of the tackifier softening point on the tensile lap shear strength of the adhesive composition. Run No. 22, having a combined melt index of 7.2, is a 1:3 blend or mixture of 25% vinyl acetate, melt index 400 and 25% vinyl acetate, melt index 1.05. Run No. 23, having a combined melt index of 8.9, is a 1:3 blend or mixture of 28% vinyl acetate, melt index 400 and 28% vinyl acetate, melt index 3.0 Run Nos. 22 and 23 demonstrate that mixtures of copolymers containing varying concentrations of vinyl acetate levels and differing melt indices are suitable for use herein.

TABLE 8: Adhesive Compositions[1]

| | 18 | 19 | 20 | 21 | 22 | 23 |
|---|---|---|---|---|---|---|
| Compositions, Parts by weight[1] | | | | | | |
| Ethylene-Vinyl Acetate Copolymer (10% vinyl acetate, melt index 70) | 40 | — | — | — | — | — |
| Ethylene-Vinyl Acetate Copolymer (18% vinyl acetate, melt index 2.5) | — | 40 | 40 | 40 | — | — |
| Ethylene-Vinyl Acetate Copolymer (25% vinyl acetate, melt index 400) | — | — | — | — | 10 | — |
| Ethylene-Vinyl Acetate Copolymer (25% vinyl acetate, melt index 1.05) | — | — | — | — | 30 | — |
| Ethylene-Vinyl Acetate Copolymer (28% vinyl acetate, melt index 400) | — | — | — | — | — | 10 |
| Ethylene-Vinyl Acetate Copolymer (28% vinyl acetate, melt index 3.0) | — | — | — | — | — | 30 |
| Glycerine Ester of Tall Oil Rosin (softening point 83°C) | 40 | — | — | — | 40 | 40 |
| Glycerine Ester of Highly Hydrogenated Rosin (softening point 82°C) | — | 40 | — | — | — | — |
| Terpene-Phenolic Resin (softening point 100°C) | — | — | 40 | — | — | — |
| Terpene-Phenolic Resin (softening point 122°C) | — | — | — | 40 | — | — |
| Wax No. X in Table 2. | 20 | 20 | 20 | 20 | 20 | 20 |
| Inspections | | | | | | |
| Viscosity, cps at 350°F (176.6°C) | 5,375 | 27,000 | 28,000 | 42,000 | 19,500 | 18,500 |
| Tensile Lap Shear, psi (kg/cm²) | 896[2] | 663 | 623 | 645 | 550 | 570 |
| one square inch overlap (6.45 cm²) | (63.0) | (46.6) | (43.8) | (45.3) | (38.6) | (40.0) |

[1] See table 3, footnote #1.

[2] One-half square inch overlap.

0 001 877

# 0 001 877

The adhesive composiiton of Run No. 15 was used to evaluate the effect of surface temperature on bond strength. The adhesive composition heated to approximately 204°C was applied to polyethylene surfaces heated to a designated temperature and the surfaces were then brought together. The results are reported in Table 9 as Run No. 24, having surfaces at 90°C, and Run No. 25, having surfaces at 25°C.

TABLE 9: Effect of Surface Temperature on Bond Strength

| Run No. | 24 | 25 |
|---|---|---|
| Surface Temperature, °C | 90 | 25 |
| Tensile Lap Shear, psi (kg/cm²) | 853 (59.98) | 141 (9.9) |

From Table 9, it can be seen that the temperature of the surface to be bonded is critical when the adhesive defined herein is applied thereto if a tensile lap shear strength in excess of about 520 pounds per square inch gauge is to be obtained. In Run 25, when the surface was 25°C, the tensile lap shear strength was only 141 pounds per square inch gauge. As Run No. 24 shows, however, when the temperature of the surface was maintained at 90°C when the adhesive was applied thereto, a tensile lap shear strength of 853 pounds per square inch gauge was obtained.

## Claims

1. An adhesive composition for bonding low-energy plastic surfaces to each other which provides a tensile lap shear strength in excess of 520 pounds per square inch gauge (36.5 Kg/cm²), tensile lap shear strength being measured by a procedure which comprises preparing test strips of the plastics material of dimensions 1 × 3 × 1/8 inch (2.54 × 7.5 × 0.31 cm) or 1 × 3 × 3/16 inch (2.54 × 7.5 × 0.47 cm), cleaning and drying the specimens, heating the surfaces to be bonded to about 90 to 95°C, heating the adhesive under test to about 176 to 190°C and applying the hot adhesive as a 1/8 inch (0.31 cm) bead over one square inch (6.45 cm²) on one of the test strips, placing another test strip thereupon to give an overlap of one square inch (6.45 cm²) maintaining the strips under a pressure of 500 grams for about 5 minutes, cooling the strips to 23°C and removing excess adhesive, measuring the force required to break the bond at an extension rate of 2 inches (5 cm) per minute, the measured force divided by the area of the bond giving the tensile lap shear strength; the said adhesive composition comprising: (1) an ethylene-vinyl ester copolymer having from 4 to 35 weight percent of a vinyl ester; (2) a tackifier selected from (a) a rosin, (b) a rosin ester, (c) a terpene resin, (d) a terpene-phenolic resin and (e) a rosin modified phenolic resin, and (3) a polyethylene wax composed of at least 70% of linear molecules and having a molecular weight of from 600 to 3000, a penetration as measured by ASTM D—1321 of from 0.25 to 1.5 at 25°C, and a density at 25°C of from 0.93 to 0.97 g/cc.

2. An adhesive composition according to claim 1 wherein said ethylene-vinyl ester copolymer is selected from ethylene-vinyl acetate, ethylene-vinyl formate, ethylene-vinyl propionate, ethylene-vinyl butyrate, and mixtures thereof.

3. An adhesive composition according to claim 1 wherein said copolymer contains from 6 to 23 weight percent of a vinyl ester.

4. An adhesive composition according to claim 1 wherein said copolymer has a melt index of from 0.5 to 200 as measured by ASTM 1238—52T.

5. An adhesive composition according to claim 1 wherein said copolymer has a melt index of from 2.0 to 100 as measured by ASTM 1238—52T.

6. An adhesive composition according to claim 1 wherein said tackifier has a softening point of from 40 to 150°C.

7. An adhesive composition according to claim 1 wherein said tackifier has a softening point of from 65 to 135°C.

8. An adhesive composition according to claim 1 wherein said rosin is selected from gum rosin, wood rosin, tall oil rosin, distilled rosin, hydrogenated rosin, dimerized rosin and polymerized rosin.

9. An adhesive composition according to claim 1 wherein said rosin ester is selected from glycerine and pentaerythritol esters of stabilized, hydrogenated, polymerized, disproportionated, dimerized and unmodified rosin.

10. An adhesive composition according to claim 1 wherein said terpene resin is selected from polyterpene and polymerized beta-pinene resins.

11. An adhesive composition according to claim 1 wherein said terpene-phenolic resin is the condensation product of phenol with terpene alcohol or alpha-terpinene.

11

12. An adhesive composition acording to claim 1 wherein said polyethylene wax has a molecular weight of from 600 to 2500.

13. An adhesive composition according to claim 1 wherein said polyethylene wax has a molecular weight of from 900 to 2000.

14. An adhesive composition according to claim 1 wherein said polyethylene wax is composed of at least 90 percent linear molecules.

15. An adhesive composition according to claim 1 wherein said polyethylene wax has a penetration as measured by ASTM—D1321 of from 0.75 to 1.00 at 25°C.

16. An adhesive composition according to claim 1 wherein said polyethylene wax has a density of from 0.94 to 0.96 g/cc at 25°C.

17. An adhesive composition according to claim 1 wherein said ethylene-vinyl ester copolymer is from 15 to 55 weight percent; said tackifier is from 25 to 45 weight percent; and said polyethylene wax is from 5 to 55 weight percent of the total composition.

18. An adhesive composition according to claim 1 wherein said ethylene-vinyl ester copolymer is from 25 to 55 weight percent; said tackifier is from 25 to 40 weight percent; and said polyethylene wax is from 5 to 50 weight percent of the total composition.

## Revendications

1. Composé adhésif, destiné au collage des surfaces de matières plastiques de faible énergie, assurant un joint par recouvrement d'un résistance au cisaillement en traction supérieure à 520 livres au pouce carré (36,5 kg/cm²), cette résistance au cisaillement en traction étant mesurée par application d'un procédé comprenant la réalisation d'éprouvettes d'essai à partir de bandes, constituées de la matière plastique intéressée, et de dimensions $1 \times 3 \times 1/8$ '' (2,54 × 7,5 × 0,31 cm) ou $1 \times 3 \times 3/16''$ (2,54 × 7,5 × 0,47 cm), le nettoyage et le séchage de ces bandes, le réchauffement des surfaces de collage à un température de l'order de 90° à 95°C, le réchauffement, à une température de l'order de 176° à 190°C, de l'adhésif à éprouver et l'application de l'adhésif ainsi réchauffé, sous la forme d'un bourrelet de 1/8'' (0,31 cm) sur une surface de 1 pouce carré (6,45 cm²) de l'une des bandes d'essai, le positionnement d'une deuxième bande d'essai sur la première de manière à réaliser un recouvrement de 1 pouce carré (6,45 cm²), le maintien d'un force de plaquage de 500 grammes sur les bandes ainsi réunies pendant 5 minutes, le refroidissement des bandes à la température de 23°C et l'élimination de l'adhésif excédentaire de celles-ci, la mesure de la force nécessaire pour provoquer la rupture du joint, appliquée à une vitesse de traction de 2'' (5 cm) par minute, et le calcul de la résistance du joint par recouvrement au cisaillement en traction, par division de la force mesurée par la superficie du joint; ledit adhésif, comprenant: (1) un copolymère d'ester d'éthylène-vinyle contenant, en pourcentage massique, entre 4 et 35% d'un ester de vinyle; (2) un agglutinant sélectionné à partir de (a) une résine naturelle, (b) un ester de résine naturelle, (c) une résine terpénique, (d) une résine terpéno-phénolique, ou (e) une résine phénolique modifiée à la résine naturelle, et (3) une cire de polyéthylène composée d'au moins 70% de molécules linéaires, et présentant un poids moléculaire compris entre 600 et 3000, un coefficient de pénétration, mesuré selon la norme ASTM D—1321, compris entre 0,25 et 1,5 à 25°C, et une masse volumique, à 25°C, comprise entre 0,93 et 0,97 g/cm³.

2. Un composé adhésif selon la revendication 1, dans lequel ledit copolymère d'ester d'éthylène-vinyle est sélectionné à partir d'acétate d'éthylène-vinyle, de formate d'éthylène-vinyle, de propionate d'éthylène-vinyl, de butyrate d'éthylène-vinyl, ou de mélanges de ces composés.

3. Un composé adhésif selon la revendication 1, dans lequel ledit copolymère contient, en pourcentage massique, entre 6 et 23% d'un ester de vinyle.

4. Un composé adhésif selon la revendication 1, dans lequel ledit copolymère présente un indice de fusion, mesuré selon la norme ASTM 1238—52T, compris entre 0,5 et 200.

5. Un composé adhésif selon la revendication 1, dans lequel ledit copolymère présente un indice de fusion, mesuré selon la norme ASTM 1238—52T, compris entre 2,0 et 100.

6. Un composé adhésif selon la revendication 1, dans lequel ledit agglutinant présente une température de ramollissement comprise entre 40° et 150°C.

7. Un composé adhésif selon la revendication 1, dans lequel ledit agglutinant présente une température de ramollissement comprise entre 65° et 135°C.

8. Un composé adhésif selon la revendication 1, dans lequel ladit résine naturelle est sélectionnée à partir de résine de gomme naturelle, de résine de bois, de résine de tallöl, de résine naturelle distillée, de résine naturelle hydrogénée, de résine naturelle dimérisée, ou de résine naturelle polyméerisée.

9. Un composé adhésif selon la revendication 1, dans laquelle ledit ester de résine naturelle est sélectionné à partir d'esters de glycérine et d'erythritole de résine naturelle stabilisée, hydrogénée, polymérisée, disproportionnée, dimérisée ou non modifiée.

10. Un composé adhésif selon la revendication 1, dans lequel ladite résine terpénique est sélectionnée à partir de résines polyterpéniques ou béta-pinéniques polymérisées.

11. Un composé adhésif selon la revendication 1, dans lequel ladite résine terpéno-phénolique est le produit de condensation du phénole avec de l'alcool terpénique ou l'alpha-terpinène.

12. Un composé adhésif selon la revendication 1, dans lequel ladite cire de polyéthylène présente un poids moléculaire compris entre 600 et 2500.

13. Un composé adhésif selon la revendication 1, dans lequel ladite cire de polyéthylène présente un poids moléculaire compris entre 900 et 2000.

14. Un composé adhésif selon la revendication 1, dans lequel ladite cire de polyéthylène est composée d'au moins 90% de molécules linéaires.

15. Un composé adhésif selon la revendication 1, dans laquelle ladite cire moléculaire présente un coefficient de pénétration, mesuré selon la norme ASTM—D 1321, compris entre 0,75 et 1,00 à 25°C.

16. Un composé adhésif selon la revendication 1, dans lequel ladite cire de polyéthylène présente une masse volumique comprise entre 0,94 et 0,96 g/cm³ à 25°C.

17. Un composé adhésif selon la revendication 1, dont la teneur dudit copolymère d'ester d'éthylène-vinyle est comprise entre des pourcentages massiques de 15 et 55%, celle dudit agglutinant entre 25 et 45%, et celle de ladite cire de polyéthylène entre 5 et 55%, tous pourcentages massiques par rapport à la composition totale.

18. Un composé adhésif selon la revendication 1, dont la teneur dudit copolymère d'ester d'éthylène-vinyle est comprise entre des pourcentages massiques de 25 et 55%, celle dudit agglutinant entre 25 et 40%, et celle de ladite cire de polyéthylène entre 5 et 50%, tous pourcentages massiques par rapport à la composition totale.

## Patentansprüche

1. Ein Klebstoffgemisch zum Aneinanderbinden von Plastikoberflächen niedriger Oberflächenenergie, das an der Verbindungsstelle eine Zerreißspannung von mehr als 520 pounds/square inch (36.5 kg/cm²) hat. Die Zerreißspannung an der Verbindungsstelle wird mit folgendem Verfahren gemessen: Probestreifen von $1 \times 3 \times 1/8$ inch (2.54cm x 7.5cm x 0.31cm) oder $1 \times 3 \times 3/16$ inch (2.54cm x 7.5cm x 0.47cm) werden aus den Plastikmaterialien geschnitten; die Muster werden gereinigt und getrocknet; die Oberflächen, die aneinander gebunden werden sollen, werden auf etwa 90 bis 95°C erhitzt; der zu untersuchende Klebstoff wird auf etwa 176 bis 190°C erhitzt; der erhitzte Klebstoff wird als Tropfen von 1/8 inch (0.31cm) auf eine Fläche von einem Quadrat-inch (6.45cm²) auf einen der Probestreifen aufgebracht; der andere Probestreifen wird so darauf plaziert, daß eine Überlappungsfläche von einem Quadrat-inch (6.45cm²) entsteht; die beiden Streifen werden etwa 5 Minuten lang mit 500g aneinandergedrückt; die Streifen werden auf 23°C abgekühlt; überflüssiger Klebstoff wird entfernt; dann wird die Kraft gemessen, die benötigt wird, um die Verbindungsstelle bei einer Drehnungsrate von 2 inches (5cm) pro Minute zu zerrießen; die gemessene Kraft wird durch die Fläche der Verbindungsstelle dividiert, und es ergibt sich so die Zereißspannung; das Klebstoffgemisch besteht dabei aus (1) einem Äthylen-Vinylester-Kopolymer mit 4 bis 35 Gewichtsprozent eines Vinylesters; (2) einem Klebrigmacher, ausgewählt aus: (a) einem Terpentinharz, (b) einem Terpentinharzester, (c) einem Terpenharz, (d) einem Terpenphenolharz, (e) einem Terpentinharzartigen phenolischen Harz; (3) einem Polyäthylenwachs, das zu mindestens 70% aus linearen Molekülen besteht, die ein Molekulargewicht zwischen 600 und 3000 haben; das bei 25°C ein Eindringvermögen zwischen 0.25 und 1.5 (gemessen nach ASTM D—1321) und eine Dichte zwischen 0.93 und 0.97 g/cm³ hat.

2. Ein Klebstoffgemisch nach Anspruch 1, wobei das Äthylen-Vinylester-Kopolymer aus einer Gruppe ausgewählt wird, die aus Äthylen-Vinyl-Azetat, Äthylen-Vinyl-Formiat, Äthylen-Vinyl-Propionat, Äthylen-Vinyl-Butyrat und Gemischen aus diesen besteht.

3. Ein Klebstoffgemisch nach Anspruch 1, wobei das Kopolymer zwischen 6 und 23 Gewichtsprozent eines Vinylesters enthält.

4. Ein Klebstoffgemisch nach Anspruch 1, wobei das Kopolymer einen Schmelzindex zwischen 0.5 und 200, gemessen gemäß ASTM 1238—52T, hat.

5. Eine Klebstoffgemisch nach Anspruch 1, wobei das Kopolymer einen Schmelzindex zwischen 2.0 und 100, gemessen gemäß ASTM—1238—52T, hat.

6. Ein Klebstoffgemisch nach Anspruch 1, wobei der Klebrigmacher einen Erweichungspunkt zwischen 40 und 150°C hat.

7. Ein Klebstoffgemisch nach Anspruch 1, wobei der Klebrigmacher einen Erweichungspunkt zwischen 65 und 135°C hat.

8. Ein Klebstoffgemisch nach Anspruch 1, wobei das Terpentinharz aus Balsamharz, Wurzelharz, Tallharz, destilliertem Terpentinharz, hydriertem Terpentinharz, dimerisiertem Terpentinharz und polymerisiertem Terpentinharz ausgewählt wird.

9. Ein Klebstoffgemisch nach Anspruch 1, wobei der Terpentinharzester aus Glyzerin- und Pentaerythriol-Estern von stabilisiertem, hydriertem, polymerisiertem, disproportioniertem, dimerisiertem und unmodifiziertem Terpentinharz ausgewählt wird.

10. Ein Klebstoffgemisch nach Anspruch 1, wobei das Terpenharz aus Polyterpen- und polymerisierten Beta-Pinen-Harzen ausgewählt wird.

11. Ein Klebstoffgemisch nach Anspruch 1, wobei das Terpenphenolharz das Kondensationsprodukt von Phenol mit Terpen-Alkohol oder Alpha-Terpinen ist.

12. Ein Klebstoffgemisch nach Anspruch 1, wobei das Polyäthylenwachs eine Molekulargewicht

13

zwischen 600 und 2500 hat.

13. Ein Klebstoffgemisch nach Anspruch 1, wobei das Polyäthylenwachs ein Molekulargewicht zwischen 900 und 2000 hat.

14. Ein Klebstoffgemisch nach Anspruch 1, wobei das Polyäthylenwachs zu mindestens 90% aus linearen Molekülen besteht.

15. Ein Klebstoffgemisch nach Anspruch 1, wobei das Polyäthylenwachs bei 25°C ein Eindringvermögen zwischen 0.75 und 1.00, gemessen gemäß ASTM—D1321, hat.

16. Ein Klebstoffgemisch nach Anspruch 1, wobei das Polyäthylenwachs bei 25°C eine Dichte zwischen 0.94 und 0.96 g/cm³ hat.

17. Ein Klebstoffgemisch nach Anspruch 1, wobei das Äthylen-Vinyl-Kopolymer 15 bis 55 Gewichtsprozent, der Klebrigmacher 25 bis 45 Gewichtsprozent und das Polyäthylenwachs 5 bis 55 Gewichtsprozent des Gesamtgemisches ausmachen.

18. Ein Klebstoffgemisch nach Anspruch 1, wobei das Äthylen-Vinyl-Kopolymer 25 bis 55 Gewichtsprozent, der Klebrigmacher 25 bis 40 Gewichtsprozent und das Polyäthylenwachs 5 bis 50 Gewichtsprozent des Gesamtgemisches ausmachen.